# EUROPÄISCHE PATENTANMELDUNG

(11) **EP 2 441 873 A2**
(43) Veröffentlichungstag der Anmeldung: **18.04.2012**
(21) Anmeldenummer: 11172659.2
(22) Anmeldetag: 05.07.2011
(51) Int. Cl.: D06F 37/26, A47L 15/42, F16L 21/00

(54) **Dichtanordnung, Verfahren zur Herstellung einer solchen Dichtanordnung sowie Geschirrspülmaschine**

(30) Priorität: 20.07.2010 DE 102010031559
(71) Anmelder: BSH Bosch und Siemens Hausgeräte GmbH, 81739 München (DE)
(72) Erfinder: Stempfle, Hermann, 89353 Glött (DE)

(57) **Zusammenfassung**

Die Erfindung betrifft eine Dichtanordnung für eine flüssigkeitsdichte Verbindung einer Anschlussöffnung (21) eines flüssigkeitsführenden Bauteils (1), insbesondere eines Spülbehälters einer Geschirrspülmaschine, mit einem Anschlussstutzen (16) einer Flüssigkeitsströmungseinrichtung (17), insbesondere einer Umwälzpumpe, dessen Anschlussstutzen (16) über einen Ringspalt (19) vom Öffnungsrand (29) der Anschlussöffnung (21) beabstandet ist. Erfindungsgemäß ist in dem Ringspalt (19) ein Dichtelement (18) vorgesehen, das mit einer radial inneren Dichtstelle (25) in Dichtanlage mit dem Anschlussstutzen (16) und mit einer radial äußeren Dichtstelle (27) in Dichtanlage mit dem Öffnungsrand (29) der Anschlussöffnung (21) ist.

## Beschreibung

Die Erfindung betrifft eine Dichtanordnung für eine flüssigkeitsdichte Verbindung einer Anschlussöffnung eines flüssigkeitsführenden Bauteils, insbesondere eines Spülbehälters einer Geschirrspülmaschine, mit einem Anschlussstutzen einer Flüssigkeitsströmungseinrichtung, insbesondere einer Umwälzpumpe, insbesondere nach dem Oberbegriff des Patentanspruches 1 sowie ein Verfahren zur Herstellung einer solchen Dichtanordnung nach dem Patentanspruch 10.

In Haushaltsgeräten, insbesondere in Geschirrspülmaschinen, sind wasserführende Aggregate oftmals mittels flüssigkeitsdichter Dichtelemente mit dem Spülbehälter verbunden.

In einer Geschirrspülmaschine kann eine Dichtanordnung beispielsweise zwischen einem Druckstutzen einer Umwälzpumpe und einem Einlassstutzen eines Spülbehälters bzw. eines Pumpentopfes geschaltet sein. Die Dichtanordnung kann ein schlauchartiges Dichtelement aus weichem Gummimaterial aufweisen, das sowohl auf den Einlassstutzen des Spülbehälters als auch auf den Druckstutzen der Umwälzpumpe aufgeschoben ist. Das schlauchartige Dichtelement ist somit über zwei radial innere Dichtstellen jeweils mit dem Einlassstutzen des Spülbehälters und dem Druckstutzen der Umwälzpumpe in Dichtanlage.

Im Bereich der Dichtstellen zwischen dem Dichtelement und den Einlass- oder Druckstutzen ist das Dichtelement mit äußeren Ringhülsen verstärkt, die aus einem im Vergleich zum Gummimaterial formstabilen, steifen Kunststoffmaterial ausgebildet sein können. Auf diese Weise ist das weiche Gummimaterial in den Dichtstellen unter einer vorgegebenen Druckspannung gesetzt.

Im Spülbetrieb ist der Innenraum des Spülbehälters bzw. des Pumpentopfes mit Überdruck beaufschlagt, der mit einer Schubkraft entgegen der Montagerichtung auf das Dichtelement wirkt. Zur stabilen Halterung wird das Dichtelement daher im Bereich seiner Dichtstellen mittels Befestigungsschellen eingefasst. Somit kann die Dichtanordnung mehrere separate Bauelemente aufweisen, die nur in aufwendiger Weise montierbar sind.

Die Aufgabe der Erfindung besteht darin, eine Dichtanordnung bzw. ein Verfahren zur Herstellung einer solchen Dichtanordnung bereitzustellen, die bauteilreduziert sowie einfach montierbar ist.

Die Aufgabe ist durch die Merkmale des Patentanspruches 1 gelöst. Bevorzugte Weiterbildungen der Erfindung sind in den Unteransprüchen offenbart.

Gemäß dem kennzeichnenden Teil des Patentanspruches 1 weist das Dichtelement eine radial innere Dichtstelle sowie eine radial äußere Dichtstelle auf. Die radial äußere Dichtstelle des Dichtelements ist mit einem Öffnungsrand einer Anschlussöffnung eines flüssigkeitsführenden Bauteils, etwa eines Geschirrspülmaschinen-Spülbehälters, in Dichtanlage. Außerdem ist das Dichtelement mit seiner radial inneren Dichtstelle in Dichtanlage mit dem innenliegenden Anschlussstutzen einer Flüssigkeitsströmungseinrichtung, etwa bzw. z.B. einer Umwälzpumpe. Auf diese Weise kann das Dichtelement montagetechnisch einfach in den Ringspalt zwischen dem Anschlussöffnungsrand sowie dem Anschlussstutzen eingepresst werden. Zusätzliche Schellen sind dabei nicht erforderlich.

Für eine zuverlässige Abdichtung kann der Öffnungsrand der Anschlussöffnung mit einer, in etwa zylindrischen Ringwand begrenzt sein. Die Ringwand kann mit der äußeren Dichtstelle des Dichtelements großflächig in Dichtanlage sein.

Wie bereits oben erwähnt, kann das Dichtelement aus einem weichen Gummimaterial gefertigt sein. Zur Steigerung seiner Formstabilität kann das Dichtelement zusätzliche Stützelemente, insbesondere Halteringe bzw. Ringhülsen aufweisen, mit deren Hilfe das Dichtelement im Bereich seiner Dichtstellen gegen den Öffnungsrand der Anschlussöffnung bzw. gegen den Anschlussstutzen gepresst werden kann.

Die beiden Dichtstellen des Dichtelementes können mit einem Ausgleichsabschnitt, insbesondere einem Balgabschnitt, miteinander verbunden sein. Der Balgabschnitt kann insbesondere faltenartig ausgebilde. Er kann montagebedingte Toleranzen ausgleichen. Zusätzlich kann der Balgabschnitt eine Übertragung von Vibrationen zwischen der Flüssigkeitsströmungseinheit, etwa der Umwälzpumpe, und dem wasserführenden Bauteil, etwa dem Spülbehälter, reduzieren.

Für eine einfache und positionsgenaue Montage des Dichtelementes kann der Öffnungsrand der Anschlussöffnung und/oder der Anschlussstutzen mit einem Bewegungsanschlag, insbesondere einem Ringanschlag, ausgebildet sein, gegen den das Dichtelement gedrückt werden kann.

Bevorzugt kann das Dichtelement mit seinen beiden Dichtstellen in gemeinsamer Montagerichtung auf den Anschlussöffnungsrand und auf den Anschlussstutzen aufgeschoben werden, bis beide Dichtstellen in Anschlag mit dem oben genannten Bewegungsanschlägen geschoben sind.

Für eine leichtgängige Montagebewegung wird der Anschlussstutzen in einem Vormontageschritt gegenüber der Anschlussöffnung lagegenau vorpositioniert. Dabei kann der Anschlussstutzen in einer ersten Abwandlung in Einbaulage zumindest teilweise in die Anschlussöffnung des wasserführenden Bauteils einragen. In Abhängigkeit von der Bauraumsituation kann der Anschlussstutzen auch mit einem Abstand höhenversetzt außerhalb der Anschlussöffnung angeordnet sein. Das Dichtelement kann mit dem oben erwähnten Ausgleichsabschnitt an beide Einbaupositionen angepasst werden.

Für den Fall, dass das Dichtelement ausgehend von einem Innenraum des wasserführenden Bauteils in den Ringspalt zwischen dem Anschlussöffnungsrand und dem Anschlussstutzen eingeschoben wird, ist in der Einbaulage das Dichtelement zum Innenraum des wasserführenden Bauteils freigelegt. Im Falle eines Spülbehälters als wasserführendes Bauteil wird dessen Innenraum während eines Spülbetriebes mit Überdruck beaufschlagt. Die Flüssigkeitssäule im Innenraum drückt daher mit dem Überdruck auf die freigelegten Dichtflächen des Dichtelementes.

Im Unterschied zum Stand der Technik wird erfindungsgemäß gerade keine Schubkraft erzeugt, die ein Loslösen des Dichtelementes von dem Anschlussöffnungsrand bzw. von dem Anschlussstutzen unterstützt. Vielmehr wird erfindungsgemäß das Dichtelement im Bereich seiner Dichtstellen gegen die beiden Bewegungsanschläge des Anschlussstutzens sowie des Anschlussöffnungsrandes gedrückt, wodurch die Abdichtung zwischen dem Anschlussstutzen und dem Anschlussöffnungsrand noch verstärkt wird.

Die Erfindung betrifft auch eine Geschirrspülmaschine, die mindestens eine erfindungsgemäße Dichtanordnung aufweist.

Sonstige vorteilhafte Weiterbildungen der Erfindung sind in den Unteransprüchen wiedergegeben.

Die Erfindung und ihre Weiterbildungen sowie deren Vorteile werden nachfolgend anhand von Zeichnungen näher erläutert.

Es zeigen jeweils schematisch:
- Fig. 1: in einer Prinzipdarstellung eine Geschirrspülmaschine;
- Fig. 2: in einer vergrößerten Schnittdarstellung eine Dichtanordnung zwischen einem Druckstutzen einer Umwälzpumpe sowie einer Anschlussöffnung im Spülbehälterboden der Geschirrspülmaschine;
- Fig. 3: eine Seitenschnittdarstellung zur Veranschaulichung der Montage der Dichtanordnung; und
- Fig. 4: in einer Ansicht entsprechend der Fig. 3 eine Abwandlung der Dichtanordnung.

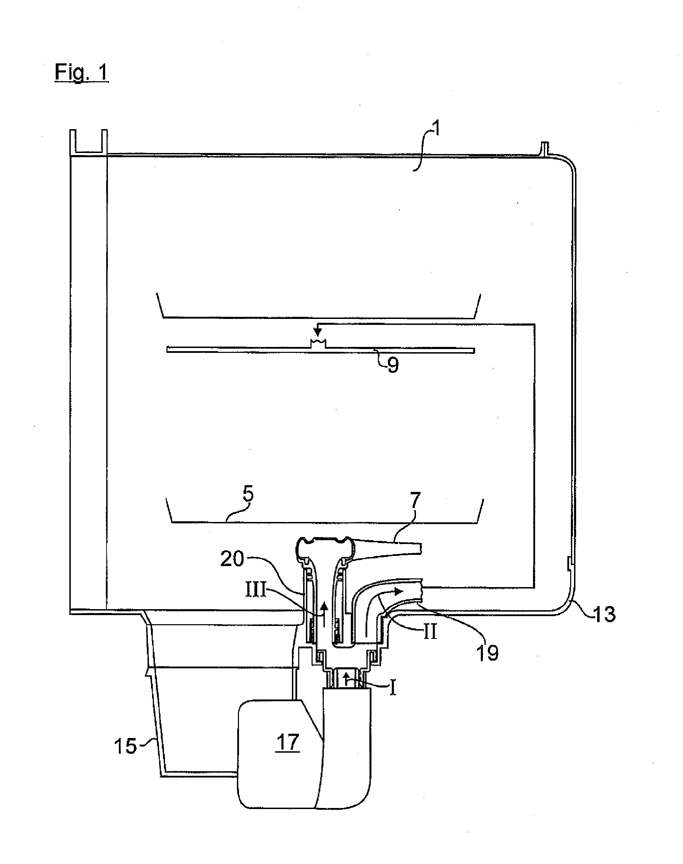

In der Fig. 1 ist grob schematisch eine Geschirrspülmaschine mit einem Spülbehälter 1 gezeigt, in dem nicht dargestelltes Spülgut in Geschirrkörben angeordnet werden kann. Im gezeigten Spülbehälter 1 sind zwei in unterschiedlichen Sprühebenen vorgesehene Sprüharme 7, 9 angeordnet, mit denen das zu reinigende Spülgut mit Spülflüssigkeit beaufschlagt wird. Die Gerätekomponenten der Geschirrspülmaschine sowie der Spülbetrieb werden nachfolgend nur insoweit beschrieben, als sie von Bedeutung für das Verständnis der Erfindung sind.

Gemäß der Fig. 1 ist unterhalb eines Spülbehälterbodens 13 neben dessen Pumpentopf 15 eine Umwälzpumpe 17 vorgesehen, die im Hydraulikkreislauf der Geschirrspülmaschine Spülflüssigkeit über Flüssigkeitsleitungen 19, 20 zu den Sprüharmen 7, 9 führt. Stromabwärts der Umwälzpumpe 17 betrachtet wird die während des Spülganges von der Umwälzpumpe 17 verdrängte Spülflüssigkeitsströmung I in zwei Teilströme II, III aufgeteilt, die über die Leitungen 19, 20 zum oberen und unteren Sprüharm 7, 9 geführt werden. Der Umwälzpumpe 17 kann eine hier nicht näher gezeigte Wasserweiche nachgeschaltet sein, die zeitlich abwechselnd die Teilströme II und III zu den Sprüharmen 19, 20 freigibt.

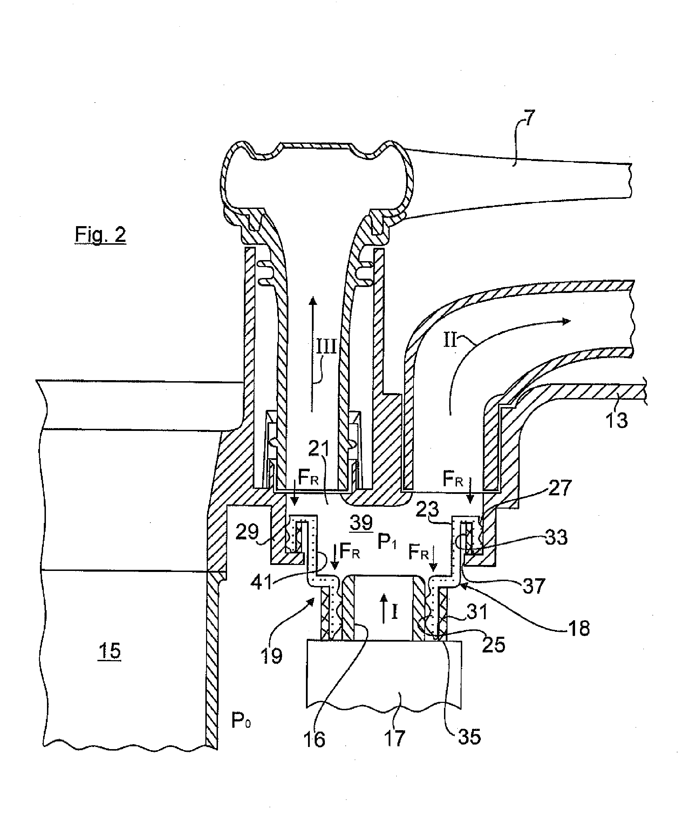

Wie aus der Fig. 2 hervorgeht, ist die Umwälzpumpe 17 mit ihrem Druckstutzen 16 über ein Dichtelement 18 an einer im Spülbehälterboden 13 vorgesehenen Anschlussöffnung 21 flüssigkeitsdicht angeschlossen. Das Dichtelement 18 überbrückt einen Ringspalt 19 zwischen dem Druckstutzen 16 und der Anschlussöffnung 21 und ist schlauchartig aus einem weichen Gummimaterial 23 gefertigt. Das Gummimaterial 23 ist außenseitig auf den Druckstutzen 16 der Umwälzpumpe 17 geschoben, so dass das Dichtelement 18 mit einer radial inneren Dichtstelle 25 in Dichtanlage mit dem Druckstutzen 16 ist.

An seiner gegenüberliegenden Seite ist das Dichtelement 18 mit seiner radial äußeren Seite 27 in Dichtanlage mit einer zylindrischen Ringwand 29, die den Öffnungsrand der Anschlussöffnung 21 im Behälterboden 13 begrenzt.

Zur Stabilisierung der Dichtstellen 25, 27 sind im Gummimaterial 23 des Dichtelementes 18 als Stützelemente starre Ringhülsen 31, 33 integriert. Der Innendurchmesser der in Einbaulage unteren Ringhülse 31 ist dabei so bemessen, dass die Dichtstelle 25 mit vorgegebener Druckspannung in radialer Richtung gegen den Druckstutzen 16 der Umwälzpumpe 16 gepresst wird. Entsprechend ist der Außendurchmesser der in Einbaulage oberen Ringhülse 33 so bemessen, dass die radial äußere Dichtstelle 27 ebenfalls mit geeigneter Druckspannung in radialer Richtung gegen die Ringwand 29 der Anschlussöffnung 21 gepresst wird.

Wie aus der Fig. 2 weiter hervorgeht, sitzen die beiden Dichtstellen 25, 27 mit ihren zugeordneten Ringhülsen 31, 33 auf Ringanschlägen 35, 37. Diese sind jeweils als ein nach innen gewandter Ringflansch am unteren Ende der Ringwand 29 ausgebildet bzw. als eine radial gegenüber dem Anschlussstutzen 16 ausgeweitete Ringschulter ausgebildet.

Alternativ zum gezeigten Ausführungsbeispiel kann die Umwälzpumpe 17 mit ihren Druckstutzen 16 auch unmittelbar mit dem Pumpentopf 15 der Geschirrspülmaschine strömungstechnisch in Verbindung sein. In diesem Fall würde die Anschlussöffnung 21 nicht unmittelbar im Spülbehälterboden 13 angeformt sein, sondern direkt im Pumpentopf 15 ausgebildet sein.

Im Spülbetrieb verdrängt die Umwälzpumpe 17 in den gezeigten Strömungsrichtungen I, II, III Spülflüssigkeit in Richtung der Sprüharme 7, 9. Im Flüssigkeitsraum 39 stromab zwischen der Umwälzpumpe 17 und der Anschlussöffnung 21 des Spülbehälters 13 herrscht dabei im Vergleich zum Umgebungsdruck p₀ ein Überdruck p₁.

Die zum Flüssigkeitsraum 39 freigelegten Flächen 41 des Dichtelementes 18 werden daher von innen mit einer Druckkraft beaufschlagt. Die sich daraus ergebenden resultierenden Kräfte F_{R} drücken gemäß der Fig. 2 das Dichtelement 18 mit seinen Ringhülsen 31, 33 sowie mit seinen radial äußeren und inneren Dichtstellen 25, 27 gegen die Ringanschläge 35, 37 der Anschlussöffnung 21 bzw. der Umwälzpumpe 17, wodurch die flüssigkeitsdichte Abdichtung zwischen dem Druckstutzen 16 und der Anschlussöffnung 21 unterstützt wird, ohne dass zusätzliche Befestigungsschellen erforderlich wären.

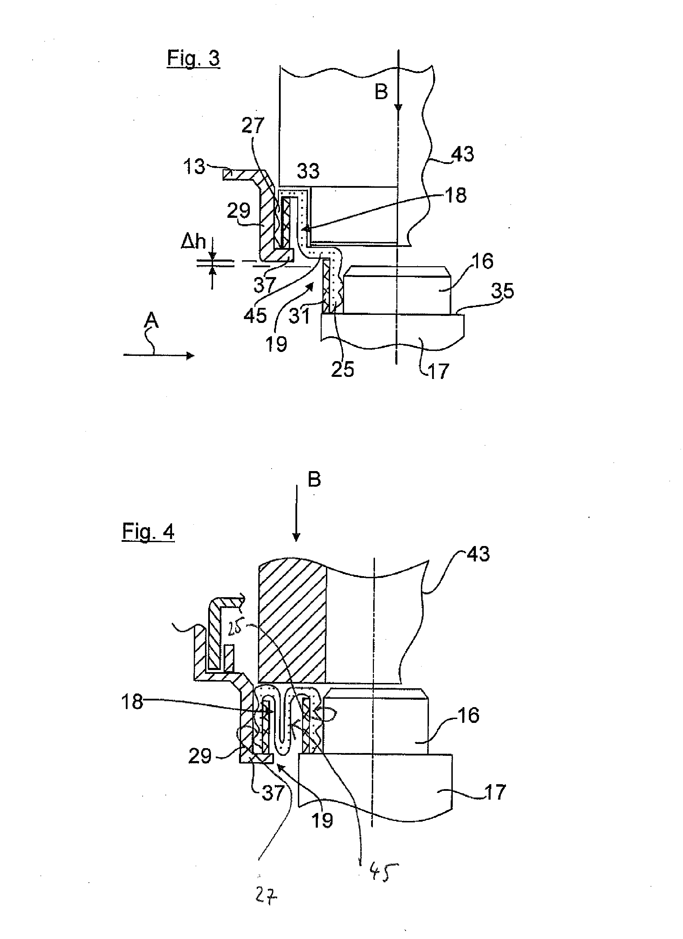

Anhand der Fig. 3 ist die Montage des Dichtelementes 18 zwischen der Anschlussöffnung 21 des Spülbehälterbodens 13 und dem Druckstutzen 16 der Umwälzpumpe 17 veranschaulicht. Demzufolge wird in einem ersten Montageschritt der Druckstutzen 16 der Umwälzpumpe 17 gegenüber der Anschlussöffnung 21 des Spülbehälters 13 mittels einer ersten Fügebewegung in einer horizontalen Montagerichtung A in seine lagerichtige Einbauposition gegenüber der Anschlussöffnung 21 gebracht. In der in der Fig. 3 gezeigten Einbauposition ist der Druckstutzen 16 mit einem Abstand Δh in Vertikalrichtung vom unteren Ende der Ringwand 29 der Anschlussöffnung 21 beabstandet.

In einem folgenden Montageschritt wird das Dichtelement 18 mittels einer zweiten Fügebewegung in einer vertikalen Montagerichtung B mit Hilfe eines Montagestempels 43 in den Ringspalt 19 zwischen der Ringwand 29 und dem Druckstutzen 16 gedrückt. Dabei werden in einem gemeinsamen Arbeitsgang die beiden Dichtstellen 25, 27 des Dichtelements 18 in Dichtanlage mit der Ringwand 29 der Anschlussöffnung 21 sowie mit dem Druckstutzen 16 der Umwälzpumpe 17 aufgepresst. Der Montagestempel 43 ist mit entsprechend abgestuften Druckflächen versehen, um die gemäß der Fig. 3 in Montagerichtung B versetzten Einbaupositionen der Dichtstellen 25, 27 zu ermöglichen.

Die beiden Dichtstellen 25, 27 des Dichtelementes 18 sind über einen Balgabschnitt 45 miteinander in Verbindung, der einen solchen montagebedingten Versatz zwischen den beiden Ringhülsen 31, 33 in der Montagerichtung B ermöglicht. Im Spülbetrieb wirkt der Balgabschnitt 45 zusätzlich als ein Isolierelement, mit dem eine Übertragung von betriebsbedingten Vibrationen von der Umwälzpumpe 17 auf den Spülbehälter 13 reduziert wird.

In der Fig. 4 ist der Druckstutzen 16 der Umwälzpumpe 17 in einer alternativen Einbaulage gezeigt, in der der Druckstutzen 16 in die Anschlussöffnung 21 des Spülbehälters einragt. Auf diese Weise sind die beiden Dichtstellen 25, 27 in gleicher horizontaler Ebene angeordnet, so dass die Bauhöhe der Dichtanordnung reduziert ist. Der Montagestempel 43 weist dabei im Unterschied zur Fig. 3 keine abgestuften Druckflächen auf, sondern eine gemeinsame Druckfläche, mit der beide Dichtstellen 25, 27 des Dichtelementes 18 in den Ringspalt 19 eingepresst werden.

Auf diese Weise ist eine vorteilhafte Dichtanordnung für eine Geschirrspülmaschine bereitgestellt, die insbesondere vom Druck- oder Nassbereich her den Pumpentopf zur Umwälzpumpe und/oder anderen Aggregaten, vorzugsweise ohne weitere Klemmen oder Sicherungen, abdichtet.

### Bezugszeichenliste

- 1: Spülbehälter
- 7, 9: unterer und oberer Sprüharm
- 13: Spülbehälterboden
- 15: Pumpentopf
- 16: Druckstutzen
- 17: Umwälzpumpe
- 18: Dichtelement
- 19: Ringspalt
- 21: Anschlussöffnung
- 23: Gummimaterial
- 25, 27: Dichtstellen
- 29: Ringwand
- 31, 33: Stützelemente
- 35, 37: Bewegungsanschläge
- 39: Flüssigkeitsraum
- 41: freigelegte Flächen des Dichtelementes 18
- 43: Montagestempel
- 45: Ausgleichsabschnitt des Dichtelementes 18
- I, II, III: Spülflüssigkeitsströmungswege
- Δh: Abstand
- p₀: Umgebungsdruck
- p₁: Überdruck
- A: erste Montagerichtung
- B: zweite Montagerichtung
- F_{R}: resultierende Kraft

## Patentansprüche

1. Dichtanordnung für eine flüssigkeitsdichte Verbindung einer Anschlussöffnung (21) eines flüssigkeitsführenden Bauteils (1), insbesondere eines Spülbehälters einer Geschirrspülmaschine, mit einem Anschlussstutzen (16) einer Flüssigkeitsströmungseinrichtung (17), insbesondere einer Umwälzpumpe, dessen Anschlussstutzen (16) über einen Ringspalt (19) vom Öffnungsrand (29) der Anschlussöffnung (21) beabstandet ist, **dadurch gekennzeichnet, dass** in dem Ringspalt (19) ein Dichtelement (18) vorgesehen ist, das mit einer radial inneren Dichtstelle (25) in Dichtanlage mit dem Anschlussstutzen (16) und mit einer radial äußeren Dichtstelle (27) in Dichtanlage mit dem Öffnungsrand (29) der Anschlussöffnung (21) ist.

2. Dichtanordnung nach Anspruch 1, **dadurch gekennzeichnet, dass** der Öffnungsrand (29) der Anschlussöffnung (21) mit einer Ringwand begrenzt ist, die mit der äußeren Dichtstelle (27) des Dichtelements (18) in Dichtanlage ist.

3. Dichtanordnung nach Anspruch 1 oder 2, **dadurch gekennzeichnet, dass** zumindest ein Stützelement (31, 33), insbesondere eine Ringhülse, vorgesehen ist, mit der das Dichtelement (18) in Dichtanlage mit der Anschlussöffnung (21) oder dem Anschlussstutzen (16) gedrückt ist.

4. Dichtanordnung nach Anspruch 1, 2 oder 3, **dadurch gekennzeichnet, dass** die beiden Dichtstellen (25, 27) des Dichtelements (18) mit einem Ausgleichsabschnitt (45), insbesondere einem Balgabschnitt, miteinander verbunden sind.

5. Dichtanordnung nach einem der vorhergehenden Ansprüche, **dadurch gekennzeichnet, dass** der Öffnungsrand (29) der Anschlussöffnung (21) und/oder der Anschlussstutzen (16) mit einem Bewegungsanschlag (35, 37), insbesondere einen Ringanschlag, ausgebildet sind, auf dem das Dichtelement (18) sitzt.

6. Dichtanordnung nach einem der vorhergehenden Ansprüche, **dadurch gekennzeichnet, dass** die beiden Dichtstellen (25, 27) des Dichtelements (18) in gleicher Montagerichtung (B) auf den Anschlussöffnungsrand (29) und auf den Anschlussstutzen (16) aufschiebbar sind.

7. Dichtanordnung nach einem der vorhergehenden Ansprüche, **dadurch gekennzeichnet, dass** der Anschlussstutzen (16) in Einbaulage zumindest teilweise in die Anschlussöffnung (21) des wasserführenden Bauteils (1) einragt, oder der Anschlussstutzen (16) mit einem Abstand (Δh) außerhalb der Anschlussöffnung (21) angeordnet ist.

8. Dichtanordnung nach einem der vorhergehenden Ansprüche, **dadurch gekennzeichnet, dass** das Dichtelement (18) zu einem Innenraum (39) des wasserführenden Bauteils (1) freigelegt ist.

9. Dichtanordnung nach einem der vorhergehenden Ansprüche, **dadurch gekennzeichnet, dass** der Innenraum (39) des wasserführenden Bauteils (1) gegenüber dem Umgebungsdruck (p₀) mit einem Überdruck (p₁) beaufschlagt ist.

10. Verfahren zur Herstellung einer Dichtanordnung, insbesondere nach einem der vorhergehenden Ansprüche, mit einem Dichtelement (18), das in einen Ringspalt (19) zwischen einem äußeren Öffnungsrand (29) einer Anschlussöffnung (21) eines wasserführenden Bauteils (1) und einem Anschlussstutzen (16) einer Flüssigkeitsströmungseinrichtung (17) eingesetzt wird.

11. Verfahren nach Anspruch 10, **dadurch gekennzeichnet, dass** das Dichtelement (18) in einem gemeinsamen Montageschritt sowohl mit dem radial äußeren Anschlussöffnungsrand (29) als auch mit dem Anschlussstutzen (16) in Dichtanlage gebracht wird.

12. Geschirrspülmaschine, insbesondere Haushalts- Geschirrspülmaschine, mit mindestens einer nach den Ansprüchen 1 mit 11 ausgebildeten Dichtanordnung.
